# EUROPEAN PATENT APPLICATION

(11) **EP 1 669 796 A1**
(43) Date of publication of application: **14.06.2006**
(21) Application number: 05017560.3
(22) Date of filing: 12.08.2005
(51) Int. Cl.: G02F 1/13357

(54) **Light generating device and display device having the same**

(30) Priority: 02.12.2004 KR 2004100540
(71) Applicant: SAMSUNG ELECTRONICS CO., LTD., Suwon-si Gyeonggi-do 442-742 (KR)
(72) Inventor: Yoon, Ju-Young, Suwon-si Gyeonggi-do (KR); Lee, Sang-Yu, Yongin-si Gyeonggi-do (KR); Kim, Gi-Cherl, Guseong-eup Yongin-si Gyeonggi-do (KR); Lee, Jong-Seo, Taean-eup Hwaseong-si Gyeonggi-do (KR); Song, Chun-Ho, Seocho-gu Seoul (KR); Lee, Sang-Gil, Kangnam-gu Seoul (KR); Park, Se-Ki, Yeongtong-gu Suwon-si Gyeonggi-do (KR); Kang, Seock-Hwan, Suwon-si Gyeonggi-do (KR)
(74) Representative: Weitzel, Wolfgang

(57) **Abstract**

A light generating device including a circuit board (110), and a plurality of light source groups (200) provided on the circuit board, each of the light source groups comprising three main light sources (210) and at least one sub light source (220) emitting light having a peak wavelength that is different from a peak wavelength of each of the main light sources.

## Description

### BACKGROUND OF THE INVENTION

### Field of the Invention

The present invention relates to a light generating device and a display device having the light generating device. More particularly, the present invention relates to a light generating device capable of generating light having a high luminance and a high color reproducibility, and a display device having the light generating device.

### Description of the Related Art

Generally, after a display device converts electrical format data from a processing unit to an image, the image is displayed. The display device may be a cathode ray tube (CRT) type display device, a plasma display panel (PDP) device, a liquid crystal display (LCD) device, an organic electroluminescence display (OELD) device, etc. The LCD device is a flat display device that displays an image using electrical and optical characteristics of liquid crystal. The LCD device is thin, lightweight, and requires low driving voltage, low power consumption, etc. Therefore, the LCD device is widely used in various fields.

The LCD device includes an LCD panel displaying an image and a separate light source providing the LCD panel with light.

Conventional LCD devices use a cold cathode fluorescent lamp (CCFL) or a flat fluorescent lamp (FFL) that emits white light for a light source. Recently, an LCD device having a red light emitting diode (LED), a green LED, and a blue LED as a light source has been developed to improve a color reproducibility. Monochromatic lights emitted from the red, green, and blue LEDs match well with a color filter of the LCD panel, thereby improving color reproducibility.

However, although the color reproducibility is improved, luminance is reduced 1 compared with a conventional fluorescent lamp.

### SUMMARY OF THE INVENTION

The present invention provides a light generating device capable of generating light having a high luminance and a high color reproducibility.

The present invention also provides a display device having the above-described light generating device.

Additional features of the invention will be set forth in the description which follows, and in part will be apparent from the description, or may be learned by practice of the invention.

The present invention discloses a light generating device, comprising a circuit board, and a plurality of light source groups provided on the circuit board, each of the light source groups comprising three main light sources and at least one sub light source emitting light having a peak wavelength that is different from a peak wavelength of each of the main light sources.

The present invention also discloses a receiving container comprising a bottom part and a lateral part, a plurality of light generating devices provided on the bottom part to generate light, each of the light generating devices comprising a circuit board, and light source groups provided on the circuit board, each of the light source groups comprises three main light sources and at least one sub light source emitting light having a peak wavelength that is different from a peak wavelength of each of the main light sources, and a display panel displaying an image using the light provided from the light generating devices.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

FIG. 1 is a plan view showing a light generating device according to an embodiment of the invention.

FIG. 2 is a graph showing a spectrum of light according to a light generating device using only main light sources.

FIG. 3 is a graph showing a color matching function.

FIG. 4 is a graph showing a light source group shown in FIG. 1.

FIG. 5 is a plan view showing a light generating device according to another exemplary embodiment of the invention.

FIG. 6 is a graph showing a light source group shown in FIG. 5.

FIG. 7 is a plan view showing a light generating device according to still another exemplary embodiment of the invention.

FIG. 8 is a graph showing a light source group shown in FIG. 7.

FIG. 9 is an exploded perspective view showing a display device according to an exemplary embodiment of the invention.

### DESCRIPTION OF THE ILLUSTRATED EMBODIMENTS

The present invention now will be described more fully hereinafter with reference to the accompanying drawings, in which embodiments of the invention are shown. This invention may, however, be embodied in many different forms and should not be construed as limited to the embodiments set forth herein. These embodiments are provided so that the disclosure is thorough and complete, and conveys the scope of the invention to those skilled in the art. Like reference numerals refer to similar or identical elements throughout.

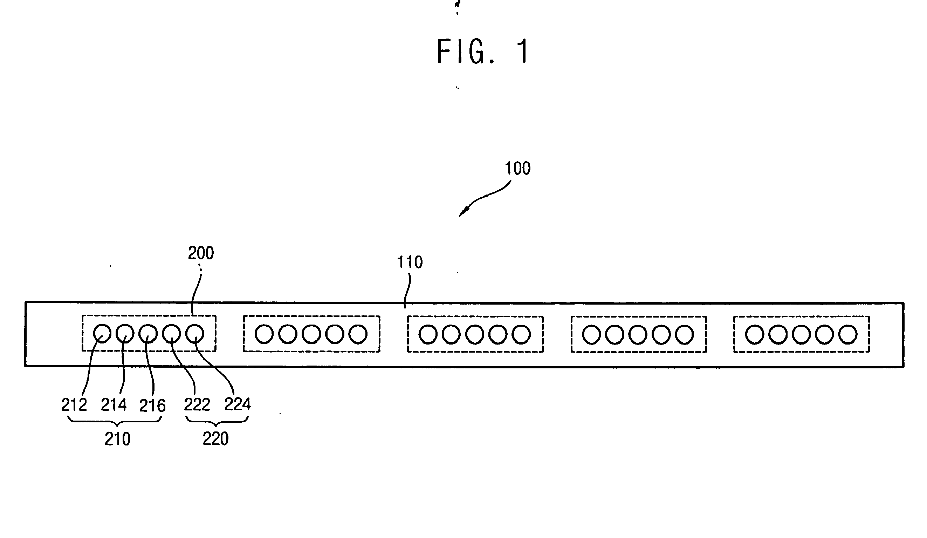

FIG. 1 is a plan view showing a light generating device according to an embodiment of the invention.

Referring to FIG. 1, a light generating device 100 includes a circuit board 110 and at least one light source group 200. The light source group 200 may be referred to as a point light source group.

The circuit board 110 may have a rectangular plate shape. The circuit board 110, for example, is a printed circuit board (PCB). Alternatively, the circuit board 110 may be a metal-coated board, which is a PCB on which metal having a high thermal conductivity is coated. A power applying line (not shown) is formed on the circuit board 110 and applies power to the light source groups 200.

The light source groups 200 are formed on the circuit board 110. Each of the light source groups 200 may include three light sources 210 and at least one sub light source 220. The three light sources 210 may be referred to as main point light sources 210 and the at least one sub point light source 220 may be referred to as a sub-point light source 220. The light source groups 200 may be provided in a line along a longitudinal direction of the circuit board 110. Alternatively, the light source groups 200 may be provided in at least two lines along the longitudinal direction of the circuit board 110. The light sources 210 and the sub light source 220 of each light source group 200 may be provided in a line or in at least two lines along the longitudinal direction of the circuit board 110. It is understood that the light sources 210 and the sub light source 220 may be arranged in various orders, respectively. For example, the sub light source 220 may be provided between the main light sources 210.

The main light sources 210 include a red light emitting diode (LED) 212, a green LED 214, and a blue LED 216. The red LED 212 emits light having a peak wavelength of between approximately 620 nm and 650 nm. The green LED 214 emits light having a peak wavelength of between approximately 510 nm and 530 nm. The blue LED 216 emits light having a peak wavelength of between approximately 450 nm and 470 nm.

The sub light source 220 emits light having a different peak wavelength than the light emitted from the main light sources 210. Thus, the sub light source 220 increases the luminance and improves the color reproducibility as compared with when the light source groups 200 only have main light sources 210.

In a non limiting embodiment of the invention, as shown in FIG. 1, the sub light source 220 includes a first sub LED 222 and a second sub LED 224. The first sub LED 222 emits light having a peak wavelength that is greater than the peak wavelength of the red LED 212. For example, the first sub LED 222 may emit light having a peak wavelength of between approximately 640 nm and 670 nm.

**The** second sub LED 224 emits light having a peak wavelength that is greater than the peak wavelength of the green LED 214. For example, the second sub LED 224 may emit light having a peak wavelength of between approximately 530 nm and 550 nm.

Thus, the first sub LED 222 and the second sub LED 224 increase the luminance of light generated from the light source groups 200 and improve the color reproducibility of the light.

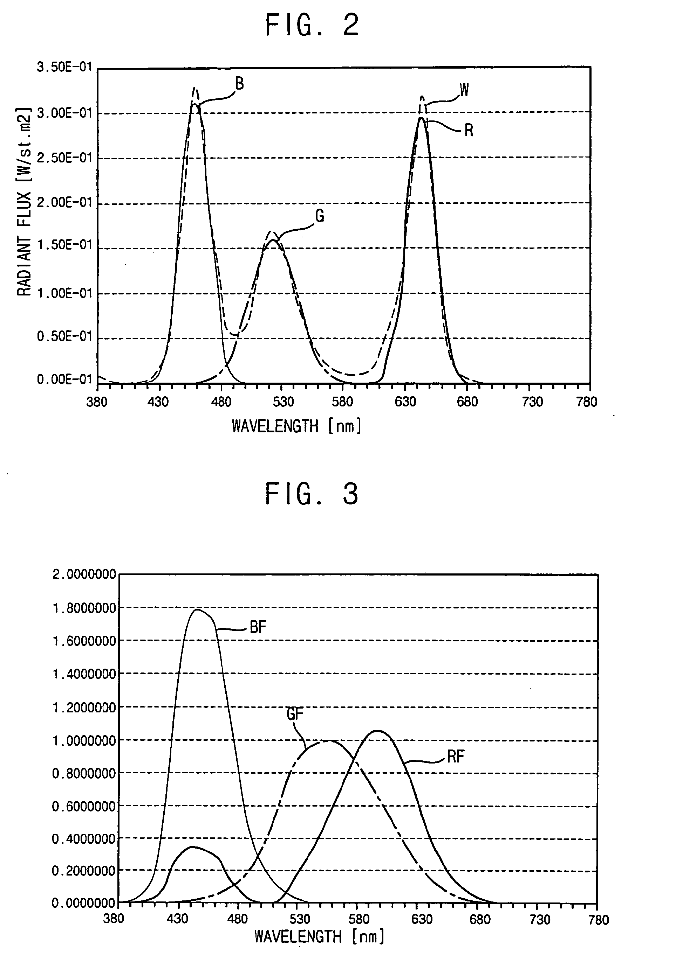

FIG. 2 is a graph showing a spectrum of light according to a comparative example using only the main light sources. FIG. 3 is a graph showing a spectrum of light using a color matching function.

Referring to FIG. 2 and FIG. 3, each of the light source groups is plotted having three main light sources without a sub light source. Each of the main light sources includes a red LED 'R', a green LED 'G' and a blue LED 'B'. Lights emitted from the red, green and blue LEDs 'R', 'G' and 'B' are mixed to generate a white light 'W'.

Color reproductability may be improved by using three-color LEDs, each having a narrow and non-overlapped region. Brightness varies according to a wavelength of light. Therefore, the degree of recognizing brightness through human eyes corresponds with a green stimulus function GF of a color matching function (CIE1931), which is shown in FIG. 3.

As shown in FIG. 3, a large portion of the green stimulus function GF overlaps with a red stimulus function RF. Accordingly, a green light having a peak wavelength of approximately 555 nm has high luminance but low color reproducibility because a large portion of the green stimulus function GF overlaps with the red stimulus functions RF.

As shown in FIG. 3, a red light having a peak wavelength of approximately 600 nm has a high luminance level but low color reproducibility because a large portion of the green stimulus function GF overlaps with the red stimulus function RF.

As shown in FIG. 3, a blue light having a peak wavelength of approximately 450 nm has a high color reproducibility but a low luminance level because the blue light is spaced far apart from the peak wavelength of approximately 555 nm.

As described above, when three-color LEDs are used, a luminance and a color reproducibility of light emitted from the LEDs are in a trade-off relation to each other. For example, red, green, and blue lights having wavelengths of pure red, pure green, and pure blue, respectively, may be used to improve a color reproducibility. Red, green, and blue lights that are shifted towards the wavelength of approximately 555 nm may be used to increase a luminance thereof.

FIG. 2 illustrates a spectrum of light that is generated when a same power, for example, 10V is applied to the red, green, and blue LEDs, respectively. In FIG. 2, for example, a red light 'R' has a peak wavelength of approximately 645 nm, a green light 'G' has a peak wavelength of approximately 520 nm, and a blue light 'B' has a peak wavelength of approximately 460 nm. A luminance of a white light 'W' that is generated from the three-color LEDs is approximately 5155nitt, and a color reproducibility of approximately 106.6%.

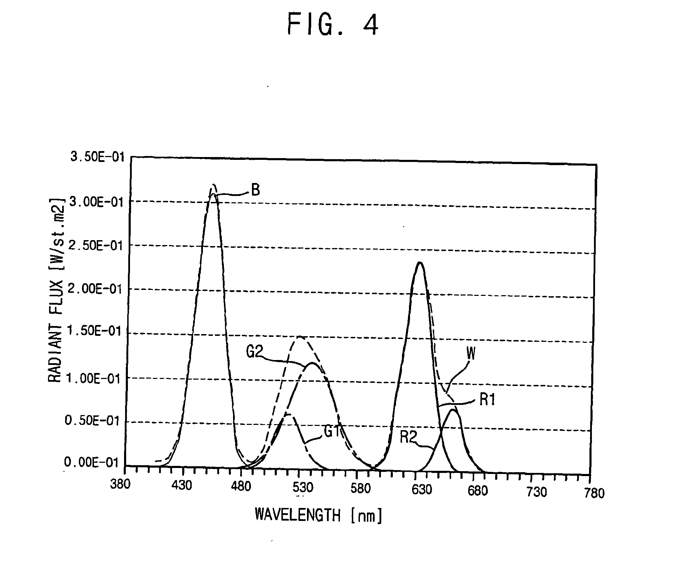

FIG. 4 is a graph showing an example of a light source group shown in FIG. 1.

Referring to FIG. 1 and FIG. 4, each of the light source groups 200 may include three main light sources 210 and two sub light sources 220. As described above, each of the main light sources 210 includes a red LED 212, a green LED 214, and a blue LED 216, and the sub light sources 220 include a first sub LED 222 and a second sub LED 224.

The red LED 212 emits a first red light R1 having a peak wavelength of approximately 630 nm. The green LED 214 emits a first green light G1 having a peak wavelength of approximately 520 nm. The blue LED 216 emits a blue light 'B' having a peak wavelength of approximately 450 nm. The first sub LED 222 emits a second red light R2 having a peak wavelength of approximately 660 nm, which is greater than the peak wavelength of the red LED 212. The second sub LED 224 emits a second green light G2 having a peak wavelength of approximately 540 nm, which is greater than the peak wavelength of the green LED 214. In the present example, a voltage of approximately 10V was applied to the blue LED 216, a voltage of approximately 10V was applied to the green LED 214 and the second sub LED 224, and a voltage of approximately 10V was applied to the red LED 212 and the first sub LED 222 to satisfy a substantially same power condition of the comparative example.

In the present example, a luminance of a white light 'W' generated from three main light sources 210 and two sub light sources 220 was approximately 6077nitt and a color reproducibility thereof was approximately 102.4%. Thus, although the color reproducibility of the present example was substantially equivalent to that of the comparative example, the luminance was greater than the luminance level of the comparative example by approximately 18%.

The luminance increases because the first green light G1 having a peak wavelength of about 520 nm and the second green light G2 having a peak wavelength of about 540 nm are mixed so that a distribution of the total green light is shifted toward a wavelength of approximately 555 nm. Further, in comparison with the comparative example, the first red light R1 having a peak wavelength of approximately 630 nm is shifted toward the wavelength of approximately 555 nm instead of toward a wavelength of approximately 645 nm, thereby increasing the luminance. In contrast, in comparison with the comparative example, the second red light R2 has a peak wavelength of approximately 660 nm instead of approximately 645 nm to prevent the color reproducibility from decreasing due to a shift of the first red light R1.

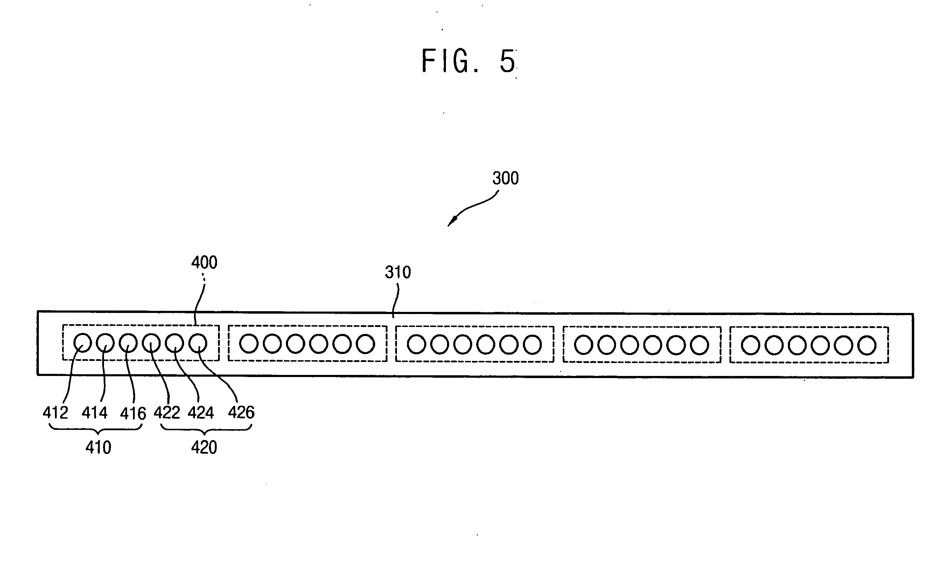

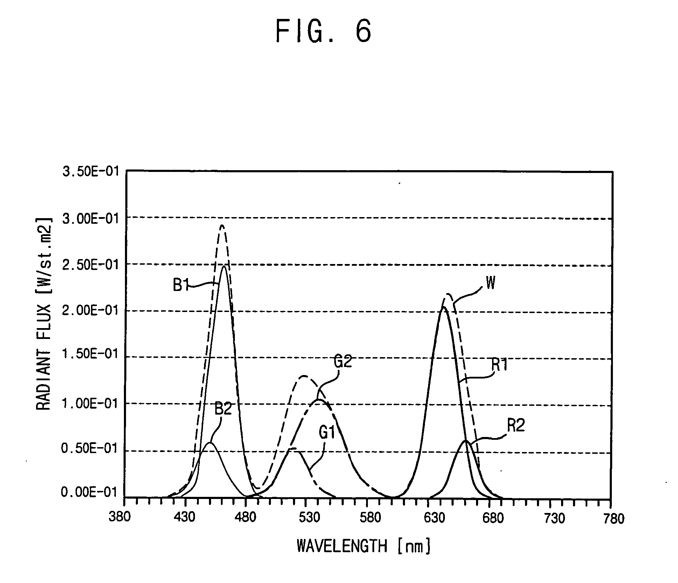

FIG. 5 is a plan view illustrating a light generating device according to another embodiment of the invention. FIG. 6 is a graph illustrating an example of a light source group shown in FIG. 5.

Referring to FIG. 5 and FIG. 6, a light generating device 300 includes a circuit board 310 and light source groups 400 formed on the circuit board 310. The circuit board 310 is substantially the same as the circuit board 110 shown in FIG. 1. Thus, for convenience purposes, any further description for the substantially same elements are omitted, as necessary.

As shown in FIG. 5, each of the light source groups 400 may include three main light sources 410 and three sub light sources 420. Each of the sub light sources 420 has a different peak wavelength from the main light sources 410, respectively. The light source groups 400 may be provided along a line in a longitudinal direction of the circuit board 310. Alternatively, the light source groups 400 may be provided along at least two lines in the longitudinal direction of the circuit board 310. The main light sources 410 and the sub light sources 420 of each light source group 400 may be provided along a line or along at least two lines in the longitudinal direction of the circuit board 310. It is understood that the main light sources 410 and the sub light sources 420 may be arranged in various orders. For example, the sub light sources 420 may be provided between the main light sources 410.

The main light sources 410 include a red LED 412, a green LED 414, and a blue LED 416. The sub light sources 420 include a first sub LED 422, a second sub LED 424, and a third sub LED 426.

The red LED 412 emits a first red light R1 having a peak wavelength of approximately 640 nm. The green LED 414 emits a first green light G1 having a peak wavelength of approximately 520 nm. The blue LED 416 emits a third blue light B1 having a peak wavelength of approximately 460 nm.

The first sub LED 422 emits a second red light R2 having a peak wavelength of approximately 660 nm, which is greater than the peak wavelength of the red LED 412. The second sub LED 424 emits a second green light G2 having a peak wavelength of approximately 540 nm, which is greater than the peak wavelength of the green LED 414. The third sub LED 426 emits a second blue light B2 having a peak wavelength of approximately 450 nm, which is greater than the peak wavelength of the blue LED 416.

In the present example, a voltage of approximately 10V was applied to the red LED 412 and the first sub LED 422, the green LED 414 and the second sub LED 424, and the blue LED 416 and the third sub LED 426, respectively, to satisfy a substantially same power condition of the comparative example described above.

In the present example, a white light 'W' generated from three main light sources 410 and three sub light sources 420 has a luminance of approximately 5683nitt and a color reproducibility of approximately 104.2%. Thus, although the color reproducibility of the present example was almost equivalent to that of the comparative example, the luminance of the present example was higher than the luminance of the comparative example by approximately 10%.

A peak wavelength of the second green light G2 and the first red light R1, respectively, is shifted toward a peak wavelength of a green light, thereby increasing the luminance. A peak wavelength of the second red light R2 and the second blue light B2, respectively, is shifted away from the peak wavelength of the green light, thereby improving the color reproducibility.

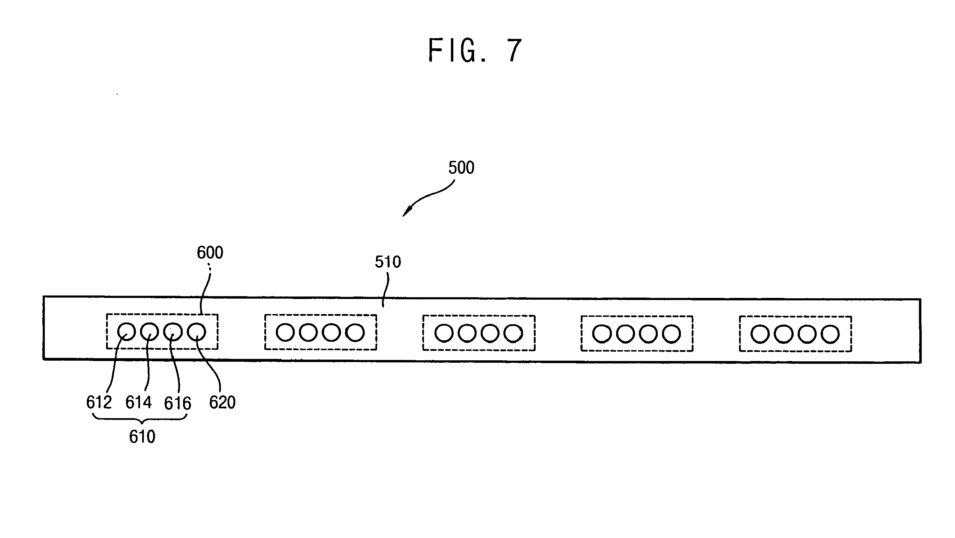

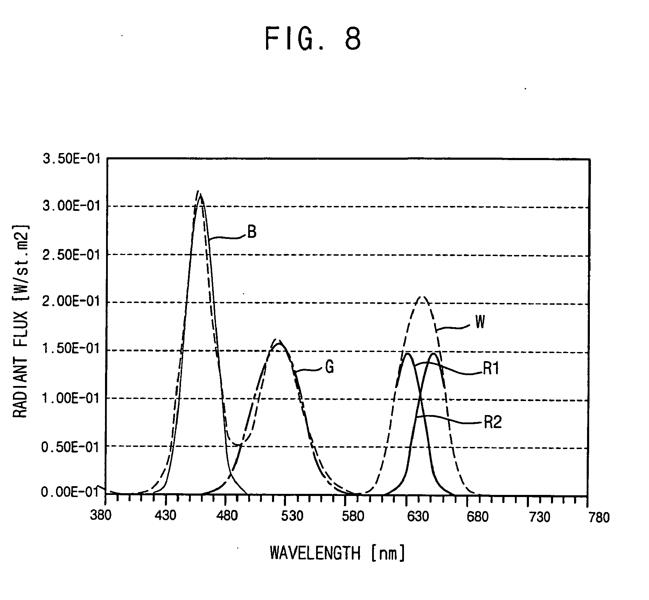

FIG. 7 is a plan view showing a light generating device according to another embodiment of the invention. FIG. 8 is a graph illustrating an example of a light source group shown in FIG. 7.

Referring to FIG. 7 and FIG. 8, a light generating device 500 includes a circuit board 510 and light source groups 600 formed on the circuit board 510. The circuit board 510 is substantially the same as the circuit board 110 shown in FIG. 1. Thus, for purposes of convenience, any further description for the substantially same elements is omitted as necessary.

Each of the light source groups 600 may include three main light sources 610 and one sub light source 620 having a different peak wavelength from the main light sources 610. The light source groups 600 may be provided along a line in a longitudinal direction of the circuit board 510. Alternatively, the light source groups 600 may be provided along at least two lines in the longitudinal direction of the circuit board 510. The main light sources 610 and the sub light source 620 of each light source group 600 may be provided along a line or along at least two lines in the longitudinal direction of the circuit board 510. It is understood that the main light sources 610 and the sub light source 620 may be arranged in various orders. For example, the sub light source 620 may be provided between the main light sources 610.

The main light sources 610 include a red LED 612, a green LED 614, and a blue LED 616. The sub light source 620 includes a sub LED 622.

The red LED 612 emits a first red light R1 having a peak wavelength of approximately 630 nm. The green LED 614 emits a green light 'G' having a peak wavelength of approximately 520 nm. The blue LED 616 emits a blue light 'B' having a peak wavelength of about 460 nm. The sub LED 622 emits a second red light R2 having a peak wavelength of approximately 650 nm.

In the present example, a voltage of about 10V was applied to the red LED 612 and the sub LED 622, the green LED 614, and the blue LED 616, respectively, to satisfy a substantially same power condition of the comparative example described above.

In the present example, a white light 'W' generated from three main light sources 410 and the three sub light sources 420 has a luminance of approximately 5309nitt and a color reproducibility of approximately 104.5%. Thus, although the color reproducibility of the present example was almost equivalent to the color reproducibility of the comparative example, the luminance of the present example was higher than the luminance of the comparative example.by approximately 3%.

A peak wavelength of the first red light R1 is shifted toward a peak wavelength of the green light G1, thereby increasing the luminance. A peak wavelength of the second red light R2 is shifted away from a peak wavelength of the green light, thereby improving the color reproducibility.

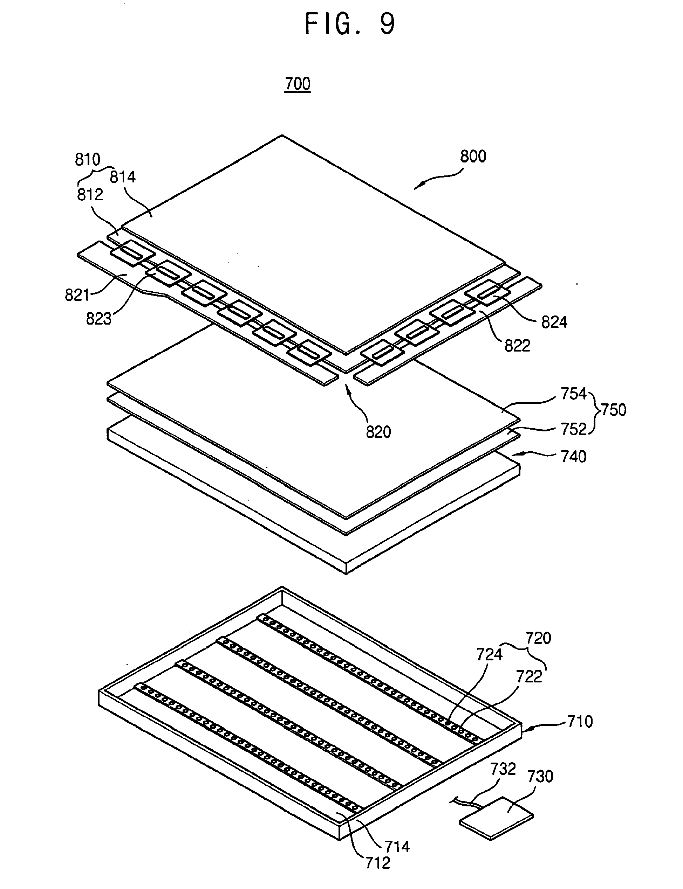

FIG. 9 is an exploded perspective view showing a display device according to an embodiment of the invention.

Referring to FIG. 9, a display device 700 includes a receiving container 710, light generating devices 720, and a display unit 800.

The receiving container 710 includes a bottom part 712 and a lateral part 714 protruding or extending from an edge portion of the bottom part 712 to define a receiving space. The receiving container 710 may be made of a metal having high strength and low deformation properties.

The light generating devices 720 are provided on the bottom part 712 of the receiving container 710. The light generating devices 720 are spaced apart from each other at regular, e.g., predetermined intervals, and are positioned substantially parallel with each other. Alternatively, the light generating devices 720 may be provided at irregular intervals.

Light sources 724 may be inserted into the receiving container 710 when a circuit board 722 of the light generating devices 720 is provided outside of the receiving container 710. Each of the light generating devices 720 may be substantially identical to the light generating devices 100, 300, and 500 shown in FIGS. 1, 5 and 7, respectively. Thus, for purposes of convenience, any further description for the substantially same elements is omitted, as necessary.

The display unit 800 includes a display panel 810 displaying an image, and a driving circuit part 820 driving the display panel 810.

The display panel 810 includes a thin film transistor (TFT) substrate 812, a color filter substrate 814 combined with the TFT substrate 812, and a liquid crystal layer (not shown) provided between the TFT substrate 812 and the color filter substrate 814. The TFT substrate 812 and the color filter substrate 814 are positioned such that they face each other.

The TFT substrate 812 includes a transparent glass substrate on which TFTs (not shown) are arranged in a matrix or array-like shape. A data line is connected with a source terminal of each TFT, and a gate line is connected with a gate terminal of each TFT. A pixel electrode that is made of a transparent and conductive material is connected with a drain terminal of each TFT. The color filter substrate 814 is spaced apart from the TFT substrate 812 and faces the TFT substrate 812. The color filter substrate 814 includes a substrate on which Red color, Green color, and Blue color (hereinafter referred to as "RGB") pixels are formed via a thin film process. The RGB pixels represent predetermined colors when light passes therethrough. A common electrode that is made of a transparent and conductive material is formed on the color filter substrate 814.

In the display panel 810 having above-described structure, when power is applied to the gate terminal and source terminal of the TFT, electric fields are generated between the pixel electrode and the common electrode and molecules of the liquid crystal provided between the TFT substrate 812 and the color filter substrate 814 are rearranged. When the liquid crystal molecule arrangement changes, optical transmissivity thereof changes to display an image having a desired gradation.

The driving circuit part 820 may include a data PCB 821 providing the data lines of the display panel 810 with data signals, a gate PCB 822 providing the gate lines of the display panel 810 with gate signals, a data flexible circuit film 823 connecting the data PCB 821 with the display panel 810, and a gate flexible circuit film 824 connecting the gate PCB 822 with the display panel 810. The data flexible circuit film 823 and the gate flexible circuit film 824 may include a tape carrier package (TCP). Alternatively, the data flexible circuit film 823 and the gate flexible circuit film 824 may include a chip on film (COF).

The display device 700 may further include a power supply device 730 generating a driving voltage to provide driving power to the light generating device 720. The driving voltage may be applied to the circuit boards 722 via a wire 732. For example, the power supply device 730 may output a driving voltage of approximately 10V.

The display device 700 may further include a light guiding member 740 provided over the light generating devices 720. The light guiding member 740 is spaced from the light generating devices 720 by a predetermined distance. The light guiding member 740 receives red light, green light, and blue light from the light generating devices 720 and combines the lights to emit a substantially white light. The light guiding member 740may be made of a poly methyl methacrylate (PMMA).

The display device 700 may further include an optical member 750 provided over the light guiding member 740. The optical member 750 is spaced from the light guiding member 740 by a predetermined distance to combine the red light, green light, and blue light.

The optical member 750 may include a light-diffusing plate 752 diffusing light emitted from the light guiding member 740 and an optical sheet 754 provided over the light-diffusing plate 752. The light-diffusing plate 752 operates to improve luminance uniformity. The light-diffusing plate 752 may have a rectangular plate-like shape. The light-diffusing plate 752 may be made of a PMMA and may include a diffusing agent that diffuses light therein.

The optical sheet 754 improves luminance by changing a path of the light diffused by the light-diffusing plate 752. The optical sheet 754 may include a light-condensing sheet condensing the light diffused by the light-diffusing plate 752 in a front view direction, thereby improving a front-view luminance. In addition, the optical sheet 754 may include a light-diffusing sheet that additionally diffuses the light diffused by the light-diffusing plate 752. The display device 700 may further include or exclude various optical sheets according to characteristics of a desired luminance.

According to the present invention, a light generating device may include between one and three sub light sources added to main light sources having a red LED, a green LED, and a blue LED. Thus, characteristics of an image displayed through the display panel may have an increased luminance and an improved color reproducibility.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A light generating device, comprising:
a circuit board; and
a plurality of light source groups provided on the circuit board, each of the light source groups comprising three main light sources and at least one sub light source emitting light having a peak wavelength that is different from a peak wavelength of each of the main light sources.

2. The light generating device of claim 1, wherein the main light sources include a red light emitting diode, a green light emitting diode and a blue light emitting diode.

3. The light generating device of claim 2, wherein the red light emitting diode has a peak wavelength of between approximately 620 nm and 650 nm, the green light emitting diode has a peak wavelength of between approximately 510 nm and 530 nm, and the blue light emitting diode has a peak wavelength of between approximately 450 nm and 470 nm.

4. The light generating device of claim 3, wherein the sub light source includes a first sub light emitting diode having a peak wavelength that is greater than the peak wavelength of the red light emitting diode.

5. The light generating device of claim 4, wherein the peak wavelength of the first sub light emitting diode is between approximately 640 nm and 670 nm.

6. The light generating device of claim 4, wherein the sub light source further comprises a second sub light emitting diode having a peak wavelength that is greater than the peak wavelength of the green light emitting diode.

7. The light generating device of claim 6, wherein the peak wavelength of the second sub light emitting diode is between approximately 530 nm and 550 nm.

8. The light generating device of claim 6, wherein the sub light source further comprises a third sub light emitting diode having a peak wavelength that is less than the peak wavelength of the blue light emitting diode.

9. The light generating device of claim 8, wherein the peak wavelength of the third sub light emitting diode is between approximately 450 nm and 470 nm.

10. A display device, comprising:
a receiving container comprising a bottom part and a lateral part;
a plurality of light generating devices provided on the bottom part to generate light, each of the light generating devices comprising:
a circuit board; and
light source groups provided on the circuit board, each of the light source groups comprises three main light sources and at least one sub light source emitting light having a peak wavelength that is different from a peak wavelength of each of the main light sources; and
a display panel displaying an image using the light provided from the light generating devices.

11. The display device of claim 10, wherein the main light sources include a red light emitting diode, a green light emitting diode and a blue light emitting diode.

12. The display device of claim 11, wherein the red light emitting diode has a peak wavelength of between approximately 620 nm and 650 nm, the green light emitting diode has a peak wavelength of between approximately 510 nm and 530 nm, and the blue light emitting diode has a peak wavelength of between approximately 450 nm and 470 nm.

13. The display device of claim 11, wherein the sub light source comprises a first sub light emitting diode having a peak wavelength greater than the peak wavelength of the red light emitting diode.

14. The device of claim 13, wherein the peak wavelength of the first sub light emitting diode is between approximately 640 nm and 670 nm.

15. The device of claim 13, wherein the sub light source further comprises a second sub light emitting diode having a peak wavelength that is greater than the peak wavelength of the green light emitting diode.

16. The device of claim 15, wherein the peak wavelength of the second sub light emitting diode is between approximately 530 nm and 550 nm.

17. The device of claim 15, wherein the sub light source further comprises a third sub light emitting diode having a peak wavelength that is less than the peak wavelength of the blue light emitting diode.

18. The device of claim 17, wherein the peak wavelength of the third sub light emitting diode is between approximately 450 nm and 470 nm.

19. The device of claim 10, wherein the light source groups are provided along a line.

20. The device of claim 10, wherein the light generating devices are positioned apart from each other and substantially parallel with each other.

21. The device of claim 10, further comprising:
a power supply device providing the circuit board with a driving voltage to drive the light generating device.

22. The device of claim 10, further comprising:
a light guiding member provided over the light generating devices to combine the light generated from the light generating device.

23. The device of claim 22, further comprising:
an optical member provided over the light guiding member.

24. The device of claim 10, wherein the display panel comprises:
a first substrate;
a second substrate facing the first substrate; and
a liquid crystal layer disposed between the first and second substrates.
